(19) Europäisches Patentamt
European Patent Office
Office européen des brevets

(11) EP 1 300 781 A2

(12) **EUROPEAN PATENT APPLICATION**

(43) Date of publication:
09.04.2003 Bulletin 2003/15

(51) Int Cl.⁷: **G06F 17/30**

(21) Application number: **02256898.4**

(22) Date of filing: **03.10.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **04.10.2001 JP 2001308274**

(71) Applicant: **SONY CORPORATION**
**Tokyo 141 (JP)**

(72) Inventor: **Kimura, Hitoshi, c/o Sony Corporation Tokyo (JP)**

(74) Representative: **DeVile, Jonathan Mark, Dr. et al**
**D. Young & Co**
**21 New Fetter Lane**
**London EC4A 1DA (GB)**

(54) **Information processing system, apparatus and method**

(57)     An unbroadcasted program is recommended to a user. A server is supplied with preference degree data as indexes of taste of users for programs from user terminals, and calculates, based on this preference degree data, correlations of preference tendencies of the programs to other users using the service. The user terminal displays an electronic program table transmitted from the server, and when reservation of viewing or recording is inputted from the user, reservation information is transmitted to the server. The server calculates predicted values of preference degrees of the respective users for programs to be broadcasted hereafter, on the basis of the correlations of the preference degrees and the reservation information, and transmits them to the respective user terminals. The user terminal refers to the preference degree predicted values of the broadcast scheduled programs, and prepares a list of programs to be recommended to the user.

*FIG. 4*

START OF PROGRAM RECOMMENDATION
PROCESSING OF SERVER

TRANSMIT ELECTRONIC PROGRAM GUIDE — S1

RECEIVE DATA FROM USER TERMINAL — S2

DATA IS RESERVATION INFORMATION? — S3

YES

RECORD RESERVATION INFORMATION IN USER PREFERENCE DATABASE — S4

NO

RECORD DATA IN USER PREFERENCE DATABASE — S5

CALCULATE PREFERENCE DEGREE PREDICTED VALUE OF BROADCAST SHCEDULED PROGRAM — S6

TRANSMIT PREFERENCE DEGREE PREDICTED VALUE OF BROADCAST SCHEDULED PROGRAM — S7

END

**Description**

BACKGROUND OF THE INVENTION

1. Field of the Invention

The present invention relates to an information processing system, an information output apparatus and method, an information processing apparatus and method, a recording medium, and a program.

2. Description of the Related Art

Conventionally, in an apparatus (hereinafter referred to as a recommendation apparatus) which selects (filtering) information, a commodity, a service, a television program, a radio program or the like in accordance with an interest, taste or the like of each user, and recommends or provides it to each user, content base filtering or cooperation filtering has been adopted as its selection method.

For example, in the case where a book is selected from among plural books by the content base filtering, and it is recommended to a user, a keyword as a selection basis is previously set in the apparatus. When the filtering is performed, it is judged whether or not the previously set keyword exists in documents of books, and only a book containing the keyword in the document is selected and is recommended to the user. Most conventional filtering adopts the content base filtering.

Next, in the case where the cooperation filtering is performed for plural books, first, a user group similar to a certain user in preference (books to be purchased are similar to each other) is previously specified. Then, a book selected by many users in the specified user group is recommended to the user.

However, in the recommendation apparatus adopting the content base filtering, there has been a problem that selected items as objects of the filtering are limited to those which can be understood by a computer.

Besides, in the recommendation apparatus adopting the content base filtering, there has been a problem that only a judgment can be made based on given information, such as a keyword, and a rule.

Further, in the recommendation apparatus adopting the content base filtering, since an item recommended to a user is selected from among given plural selection items on the basis of a predetermined rule, there has been a problem that the item recommended to the user can be selected only from among the given items.

On the other hand, in the recommendation apparatus adopting the cooperation filtering, a user group with a similar preference tendency is specified on the basis of a preference tendency of a user, and an item indicated by many users of the specified user group is recommended to the user, so that an object recommended to the user can be selected from among unspecific items.

However, in the conventional recommendation apparatus adopting the cooperation filtering, it is necessary that many users using the system evaluate plural items in advance, and there has been a problem that a load is imposed on the users. That is, for example, in the case of an apparatus for recommending a television program to a user, the user must evaluate a program each time he or she views the program, and this is very troublesome.

Besides, in the conventional recommendation apparatus adopting the cooperation filtering, there has been a problem that recommended items are limited to items already evaluated by other users. That is, for example, in the case where a television program is recommended to a user, although a program broadcasted periodically, for example, every day or every week, or a program broadcasted in series can be recommended, since an unbroadcasted program is not evaluated by users, it can not be recommended.

SUMMARY OF THE INVENTION

Various aspects and features of the present invention are defined in the appended claims.

The present invention has been made in view of conventional recommendation, apparatus. Embodiments of the present invention can enable an unevaluated new item to be recommended to a user by calculating a predicted preference value for the new item on the basis of reservation information.

Embodiments of the present invention can provide an information processing system in which an unevaluated new item can be recommended to a user, an information output apparatus and method, an information processing apparatus and method, a recording medium, and a program.

An information processing system of the invention is characterized in that an information output apparatus comprises reception means for receiving designation of an item from a user, acquisition means for acquiring a preference value of the user for the item received by the reception means, first transmission means for transmitting identification information for identifying the item the designation of which is received by the reception means and the preference value corresponding to the item acquired by the acquisition means to an information processing apparatus through a network, second transmission means for transmitting, in a case where the designation of the item received by the reception means is designation of reservation of the item, reservation information of the item and corresponding identification information of the item to the information processing apparatus through the network, preparation means for preparing a recommended item to be presented to the user on the basis of a predicted preference value, transmitted from the information processing apparatus, for an item a preference value of which is not acquired by the acquisition means, and presentation means for presenting the recommended item prepared by the preparation means to the user, and the information processing apparatus comprises first storage means for storing the identification information of the item transmitted from the information output apparatus and the corresponding preference value for each user, second storage means for storing the reservation information of the item transmitted from the information output apparatus and the corresponding identification information of the item for each user, calculation means for calculating the predicted preference value for the item the preference value of which is not stored in the first storage means for each user, on the basis of the preference values of the two or more users stored in the first storage means and the reservation information of the two or more users stored in the second storage means, and third transmission means for transmitting the predicted preference value calculated by the calculation means to the corresponding user.

The item may be made information, a commodity, a service, content or a broadcast program.

In the information processing system of the invention, and in the information output apparatus, the designation of the item is received from the user, the preference value of the user for the received item is acquired, the identification information for identifying the item the designation of which is received and the acquired preference value corresponding to the item are transmitted to the information processing apparatus through the network, in the case where the received designation of the item is the designation of the reservation of the item, the reservation information of the item and the corresponding identification information of the item are transmitted to the information processing apparatus through the network, the recommended item to be presented to the user is prepared on the basis of the predicted preference value, transmitted from the information processing apparatus, for the item the preference value of which is not acquired, and the recommended item prepared is presented to the user, and in the information processing apparatus, the identification information of the item transmitted from the information output apparatus and the corresponding preference value are stored for each user, the reservation information of the item transmitted from the information output apparatus and the corresponding identification information of the item are stored for each user, the predicted preference value for the item the preference value of which is not stored is calculated for each user, on the basis of the stored preference values of the two or more users and the stored reservation information of the two or more users, and the predicted preference value calculated is transmitted to the corresponding user.

An information output apparatus is characterized by comprising first reception means for receiving designation of an item from a user, first acquisition means for acquiring a preference value of the user for the item received by the first reception means, first transmission means for transmitting identification information for identifying the item the designation of which is received by the first reception means and the preference value corresponding to the item acquired by the first acquisition means to an information processing apparatus through a network, second transmission means for transmitting, in a case where the designation of the item received by the first reception means is designation of reservation of the item, reservation information of the item and corresponding identification information of the item to the information processing apparatus through the network, preparation means for preparing recommended items to be presented to the user on the basis of predicted preference values, transmitted from the information processing apparatus, for items preference values of which are not acquired by the first acquisition means, and presentation means for presenting the recommended items prepared by the preparation means to the user.

Receiving means for receiving a list of the items from the information processing apparatus, and display means for displaying the list of the items received by the receiving means are further provided, and the first reception means may be made to receive the designation of the item by the user from among the list of the items displayed by the display means.

The item may be made information, a commodity, a service, or content.

The item may be made a broadcast program.

Viewing means for viewing the broadcast program, recording means for recording the broadcast program, and reproduction means for reproducing the broadcast program may be further provided.

Second acquisition means for acquiring information concerning a broadcasting time of the broadcast program, first calculation means for calculating an accumulated viewing time in which the broadcast program is viewed by the viewing means, second calculation means for calculating a recording time in which the broadcast program is recorded by the recording means, third calculation means for calculating a reproduction time in which the broadcast program is reproduced by the reproduction means, fourth calculation means for calculating the preference value by dividing the accumulated viewing time calculated by the first calculation means by the broadcasting time acquired by the second acquisition means, and fifth calculation means for calculating the preference value by dividing the reproduction time calculated by the third calculation means by the recording time calculated by the second calculation means may be further provided.

Second reception means for receiving input of the preference value from the user, and judgment means for judging whether or not the input of the preference value has been received by the second reception means are further provided, and the first acquisition means may be made to acquire, in a case where the judgment means judges that the input of the preference value has been received, the preference value the input of which has been received by the second reception means, and may be made to acquire, in a case where the judgment means judges that the input of the preference value has not been received, the preference value calculated by the fourth calculation means or the fifth calculation means.

The designation of the reservation may include purchase reservation of information, service or content, view reservation of a broadcast program, or recording reservation thereof.

The first transmission means may be made to transmit information concerning the user, together with the preference value.

The information concerning the user may include at least one of plural pieces of information concerning an age, a gender, an address, a use language, and a taste.

An information output method of the invention is characterized by comprising a reception step of receiving designation of an item from a user, an acquisition step of acquiring a preference value of the user for the item received by a processing of the reception step, a first transmission step of transmitting identification information for identifying the item the designation of which is received by the processing of the reception step and the preference value corresponding to the item acquired by a processing of the acquisition step to an information processing apparatus through a network, a second transmission step of transmitting, in a case where the designation of the item received by the processing of the reception step is designation of reservation of the item, reservation information of the item and corresponding identification information of the item to the information processing apparatus through the network, a preparation step of preparing a recommended item to be presented to a user on the basis of a predicted preference value, transmitted from the information processing apparatus, for an item a preference value of which is not acquired by the processing of the acquisition step, and a presentation step of presenting the recommended item prepared by a processing of the preparation step to the user.

A program of a first recording medium of the invention is characterized by comprising a reception step of receiving designation of an item from a user, an acquisition step of acquiring a preference value of the user for the item received by a processing of the reception step, a first transmission step of transmitting identification information for identifying the item the designation of which is received by the processing of the reception step and the preference value corresponding to the item acquired by a processing of the acquisition step to an information processing apparatus through a network, a second transmission step of transmitting, in a case where the designation of the item received by the processing of the reception step is designation of reservation of the item, reservation information of the item and corresponding identification information of the item to the information processing apparatus through the network, a preparation step of preparing a recommended item to be presented to a user on the basis of a predicted preference value, transmitted from the information processing apparatus, for an item a preference value of which is not acquired by the processing of the acquisition step, and a presentation step of presenting the recommended item prepared by a processing of the preparation step to the user.

A first program of the invention causes a computer to execute a reception step of receiving designation of an item from a user, an acquisition step of acquiring a preference value of the user for the item received by a processing of the reception step, a first transmission step of transmitting identification information for identifying the item the designation of which is received by the processing of the reception step and the preference value corresponding to the item acquired by a processing of the acquisition step to an information processing apparatus through a network, a second transmission step of transmitting, in a case where the designation of the item received by the processing of the reception step is designation of reservation of the item, reservation information of the item and corresponding identification information of the item to the information processing apparatus through the network, a preparation step of preparing a recommended item to be presented to a user on the basis of a predicted preference value, transmitted from the information processing apparatus, for an item a preference value of which is not acquired by the processing of the acquisition step, and a presentation step of presenting the recommended item prepared by a processing of the preparation step to the user.

In the information output apparatus and method of the invention, the recording medium, and the program, the designation of the item is received from the user, the preference value of the user for the received item is acquired, the identification information for identifying the item the designation of which is received and the acquired preference value corresponding to the item are transmitted to the information processing apparatus through the network, in the case where the designation of the received item is the designation of the reservation of the item, the reservation information of the item and the corresponding identification information of the item are transmitted to the information processing apparatus through the network, the recommended item to be presented to the user is prepared on the basis of the predicted preference value, transmitted from the information processing apparatus, for the item the preference value of which is not acquired, and the recommended item prepared is presented to the user.

An information processing apparatus of the invention comprises first storage means for storing identification information of an item transmitted from an information output apparatus and a corresponding preference value for each user, second storage means for storing reservation information of an item transmitted from the information output apparatus and corresponding identification information of the item for each user, calculation means for calculating a predicted preference value for an item a preference value of which is not stored in the first storage means for each user, on the basis of the preference values of the two or more users stored in the first storage means and the reservation information of the two or more users stored in the second storage means, and first transmission means for transmitting the predicted preference value calculated by the calculation means to the corresponding user.

In tire calculation means, correlations between one user and the other plural users are obtained on the basis of the preference values of the plural users for the one or more items, digitized values on the basis of existence of reservation of the users other than the one user for the one item are weighted according to heights of the correlations between the one user and the other users, these are added for the plural users other than the one user, and the predicted preference value of the one user for the item the preference value of which is not stored by the first storage means is calculated.

Third storage means for storing a list of the items to be displayed by the information output apparatus, and second transmission means for transmitting the list of the items stored by the third storage means to the information output apparatus may be further provided.

The item may be made a broadcast program.

The item may be made information, a commodity, a service, or content.

An information processing method of the invention is characterized by comprising a first storage step of storing identification information of an item transmitted from an information output apparatus and a corresponding preference value for each user, a second storage step of storing reservation information of an item transmitted from the information output apparatus and corresponding identification information of the item for each user, a calculation step of calculating a predicted preference value for an item a preference value of which is not stored by a processing of the first storage step for each user, on the basis of the preference values of the two or more users stored by the processing of the first storage step and the reservation information of the two or more users stored by a processing of the second storage step, and a transmission step of transmitting the predicted preference value calculated by a processing of the calculation step to the corresponding user.

A program of a second recording medium of the invention is characterized by comprising a first storage control step of controlling storage of identification information of an item transmitted from an information output apparatus and a corresponding preference value for each user, a second storage control step of controlling storage of reservation information of an item transmitted from the information output apparatus and corresponding identification information of the item for each user, a calculation step of calculating a predicted preference value for an item a preference value of which is not stored by a processing of the first storage control step for each user, on the basis of the preference values of the two or more users stored by the processing of the first storage control step and the reservation information of the two or more users stored by a processing of the second storage control step, and a transmission step of transmitting the predicted preference value calculated by a processing of the calculation step to the corresponding user.

A second program of the invention causes a computer to execute a first storage control step of controlling storage of identification information of an item transmitted from an information output apparatus and a corresponding preference value for each user, a second storage control step of controlling storage of reservation information of an item transmitted from the information output apparatus and corresponding identification information of the item for each user, a calculation step of calculating a predicted preference value for an item a preference value of which is not stored by a processing of the first storage control step for each user, on the basis of the preference values of the two or more users stored by the processing of the first storage control step and the reservation information of the two or more users stored by a processing of the second storage calculation step to the corresponding user.

In the information processing apparatus and method of the invention, the recording medium, and the program, the identification information of the item transmitted from the information output apparatus and the corresponding preference value are stored for each user, the reservation information of the item transmitted from the information output apparatus and the corresponding identification information of the item are stored for each user, the predicted preference value for the item the preference value of which is not stored is calculated for each user on the basis of the stored preference values of the two or more users and the stored reservation information of the two or more users, and the predicted preference value calculated is transmitted to the corresponding user.

BRIEF DESCRIPTION OF THE DRAWINGS

The invention will now be described by way of example with reference to the accompanying drawings, throughout which like parts are referred to by like references, and in which:

Fig. 1 is a block diagram showing a structural example of an information processing system of the invention.
Fig. 2 is a block diagram showing a structural example of a server.
Fig. 3 is a block diagram showing a structural example of a user terminal.
Fig. 4 is a flowchart for explaining a program recommendation processing of the server.
Fig. 5 is a flowchart for explaining a program recommendation processing of the user terminal.
Fig. 6 is a view showing an example of data recorded in a user preference database.
Fig. 7 is a view showing an example of an operation input part of a recommendation apparatus.
Fig. 8 is a view showing an example of data recorded in a user profile database.
Fig. 9 is a view showing another example of data recorded in the user profile database.
Fig. 10 is a flowchart for explaining a recommended program selection processing of a recommendation apparatus of Fig. 3 in detail.
Fig. 11 is a block diagram showing a structural example of a general-purpose personal computer made to have the functions of the server of the invention or the recommendation apparatus.

## DETAILED DESCRIPTION OF THE PREFERRED EMBODIMENTS

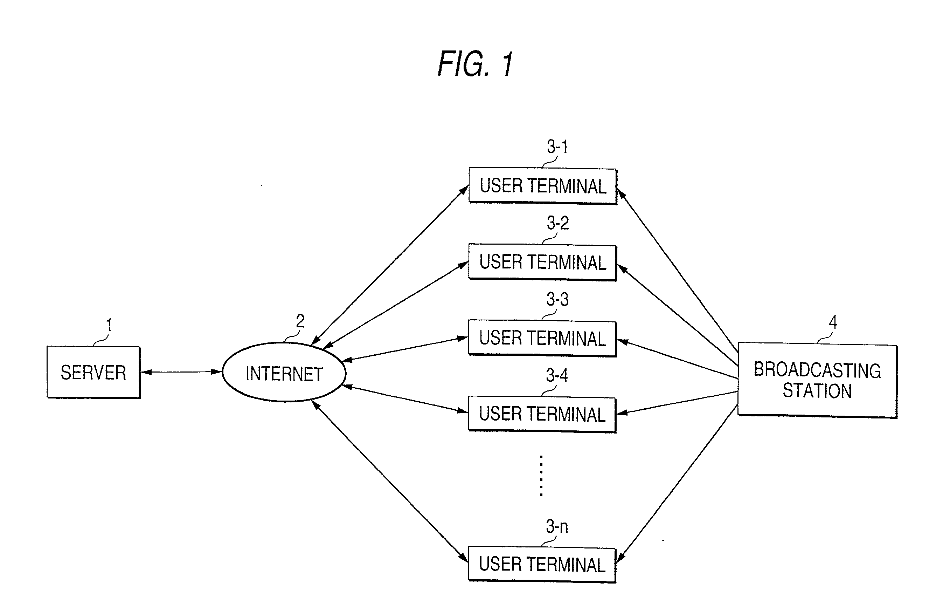

A structural example of an information processing system in a case where the present invention is applied to television broadcasting, will be described with reference to Fig. 1. A server 1 transmits an electronic program guide through an internet 2 to user terminals 3-1 to 3-n, and records preference degree data as an index of taste of a user for a program supplied from user terminals 3-1 to 3-n. Besides, on the basis of the recorded preference degree data, the server 1 calculates a predicted value of a preference degree (hereinafter referred to as a preference degree predicted value) of each user for a program scheduled to be broadcasted, and transmits it to the corresponding user terminal 3-i (i = 1, 2, ..., n).

The user terminals 3-1 to 3-n present the electronic program guide supplied from the server 1 through the internet 2 (or television broadcasting electric wave) to users, and urge the users to select, from that, programs to be viewed or programs to be recorded. When receiving selection of programs from the users, the user terminals 3-1 to 3-n perform corresponding processing, calculate preference degree data, and supply them to the server 1 (details of the processing will be described later). Besides, the user terminals 3-1 to 3-n prepare lists of programs the viewing or recording of which is recommended to the users, on the basis of the preference degree predicted values supplied from the server 1, and present them to the users.

The broadcasting station 4 transmits programs to the user terminals 3-1 to 3-n through television broadcasting electric waves.

Incidentally, in the following description, in the case where it is not necessary to individually distinguish the user terminals 3-1 to 3-n, they are collectively called the user terminal 3.

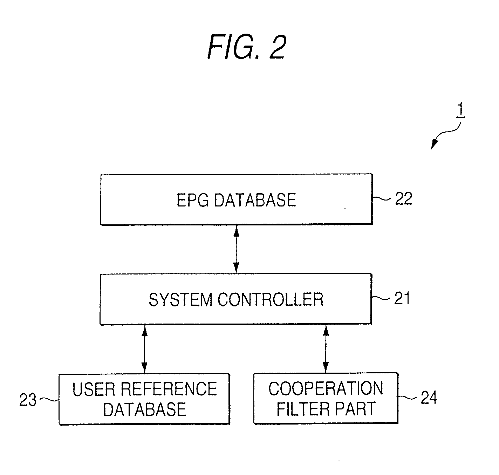

Next, a structural example of the server 1 will be described with reference to Fig. 2. A system controller 21 controls respective parts of the server 1 and causes them to execute various processings. Besides, the system controller 21 communicates with the user terminal 3 through the internet 2, supplies information to the respective parts in the server 1, and reads out information from the respective parts.

An EPG (Electronic Program Guide) database 22 stores an electronic program guide as a broadcasting schedule table of television programs on the air at present or scheduled to be broadcasted hereafter, and suitably supplies it to the user terminal 3 from the system controller 21. Incidentally, the electronic program guide includes the title of each of programs, a broadcast day, a broadcast start time, a broadcast end time, a broadcasting station 4, program identification information for identifying the program, and a brief explanatory note of broadcast contents of the program.

A user preference database 23 arranges and records, for respective users, preference degree data of the respective users for programs received from the user terminal 3 through the system controller 21 and program identification information of reservation programs. Besides, the user preference database 23 suitably supplies the stored data to a cooperation filter part 24 through the system controller 21.

When the data is supplied from the user preference database 23, on the basis of that, the cooperation filter part 24 calculates preference degree predicted values of the respective users for programs scheduled to be broadcasted hereafter, and supplies them to the system controller 21.

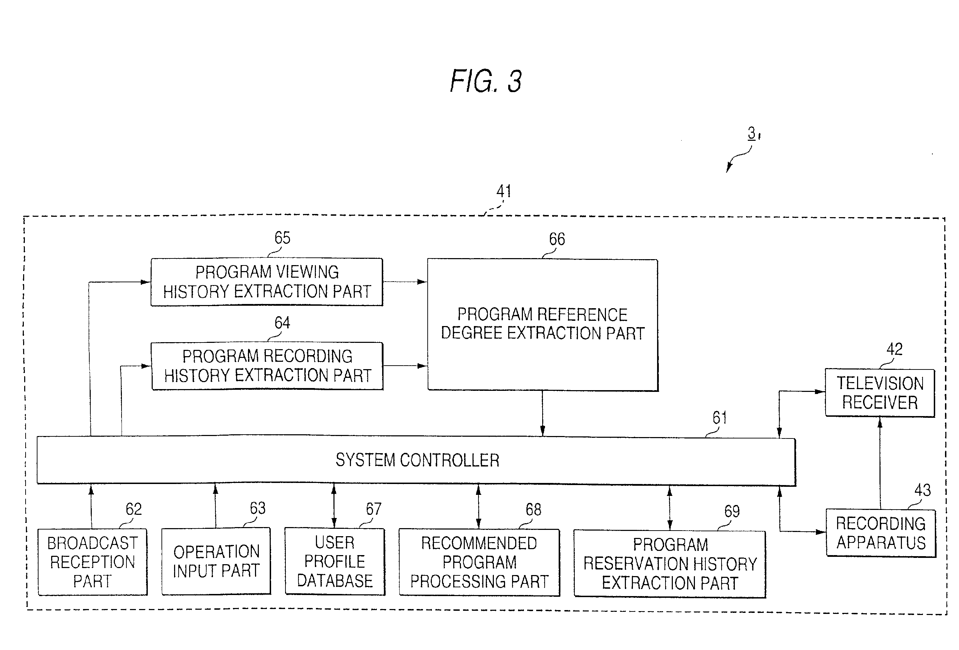

Next, a structural example of the user terminal 3 will be described with reference to Fig. 3. The user terminal 3 is constituted by a recommendation apparatus 41, a television receiver 42, and a recording apparatus 43.

A system controller 61 of the recommendation apparatus 41 controls respective parts of the recommendation apparatus 41 by a previously set program or an input from an operation input part 63, and causes them to execute various processings. Besides, the system controller 61 transmits and receives various pieces of information to and from the server 1 through the internet 2, temporarily stores the acquired information, supplies it to the respective parts, and controls the deliver of information between the respective parts in the recommendation apparatus 41. Besides, the system controller 61 is connected to the television receiver 42 and the recording apparatus 43, and performs input/output of information.

A broadcast reception part 62 receives an electronic program guide supplied from the broadcast station 4, and supplies it to the system controller 61. The operation input part 63 is constructed as plural buttons set in a main body of the recommendation apparatus 41 or as a remote controller separate from the main body of the recommendation apparatus 41, receives input of various operations, such as a recording instruction of a program, a reproduction instruction, a reservation instruction of a program, a viewing instruction of a program, or an input of a preference degree for a program, from a user, and supplies it to the system controller 61.

A program recording history extraction part 64 acquires, through the system controller 61, program identification information and a recording time of a program inputted from the operation input part 63 and receiving an instruction of recording, and supplies the program identification information and the information concerning the recording time to a program preference degree extraction part 66.

A program viewing history extraction part 65 acquires, through the system controller 61, program identification information of a program inputted from the operation input part 63 and receiving an instruction of viewing by the television receiver 42 and information concerning its viewing time, and supplies them to the program preference degree extraction part 66. Besides, when an instruction to reproduce a recorded program is inputted from the operation input part 63, the program viewing history extraction part 65 counts a time until an instruction to stop the reproduction is inputted from the operation input part 63 (or a time until the reproduction of the program is ended), and supplies information concerning the reproduction time of the program to the program preference degree extraction part 66. However, the program viewing history extraction part 65 does not count a time of fast-forward, rewinding, or pause in the reproduction.

The program preference degree extraction part 66 calculates a preference degree on the basis of the program identification information and the viewing time of the program viewed by the television receiver 42, inputted from the program viewing history extraction part 65. Besides, the program preference degree extraction part 66 calculates a preference degree on the basis of the recording time of the program recorded by the recording apparatus 43 and inputted from the program recording history extraction part 64, and the reproduction time of the recorded program inputted from the program viewing history extraction part 65. The program preference degree extraction part 66 causes a user profile database 67 to store the preference degree for each program calculated in this way through the system controller 61.

The user profile database 67 records information concerning a user, such as a user name of the user possessing the user terminal 3, a user ID at access to the server 1, user's birth date, and gender. Besides, the user profile database 67 makes the program identification information supplied from the program preference degree extraction part 66 correspond to the preference degree and records them. However, in the case where a preference degree for a program viewed by the television receiver 42 is inputted from the operation input part 63, the user profile database 67 records the preference degree inputted from the operation input part 63 with priority. Besides, the user profile database 67 records program identification information of a reservation program supplied from a program reservation history extraction part 69. The user profile database 67 transmits the program identification information recorded in this way and the corresponding preference degree information, or the program identification information of the reservation program to the server 1 through the system controller 61.

A recommended program processing part 68 receives input of the electronic program guide and preference degree predicted values corresponding to broadcast scheduled programs from the server 1, carries out an operation for a list of programs to be recommended to a user on the basis of this, and supplies it to the television receiver 42 through the system controller 61.

When an instruction to reserve a broadcast scheduled program is inputted from the operation input part 63, the program reservation history extraction part 69 acquires program identification information of the broadcast scheduled program through the system controller 61, and causes the user profile database 67 to record it.

In accordance with an instruction to select a viewing program inputted from the operation input part 63, the television receiver 42 selects a predetermined channel at a predetermined time, and displays the program. Besides, the television receiver 42 displays a reproduction program supplied from the recording apparatus 43. Besides, the television receiver 42 displays the electronic program guide supplied from the broadcast reception part 62 through the system controller 61. Further, while the preference degree is inputted by the operation of the operation input part 63, the television receiver 42 displays the preference degree under setting. Besides, the television receiver 42 displays the list of recommended programs supplied from the recommended program processing part 68.

The recording apparatus 43 is, for example, a video tape recorder or a DVD (Digital Versatile Disc) recorder, and records a program in accordance with the recording instruction inputted from the operation input part 63. Besides, the recording apparatus 43 reproduces the recorded program in accordance with the instruction to reproduce the recorded program, and supplies reproduction signals to the television receiver 42.

Incidentally, in the foregoing structural example, although the recommendation apparatus 41, the television receiver 42, and the recording apparatus 43 are separate apparatuses, the recommendation apparatus 41 and the television receiver 42 can be made to have an integral structure. Besides, the television receiver 42 and the recording apparatus 43 can be made to have an integral structure, or the recommendation apparatus 41, the television receiver 42, and the recording apparatus 43 can be made to have an integral structure.

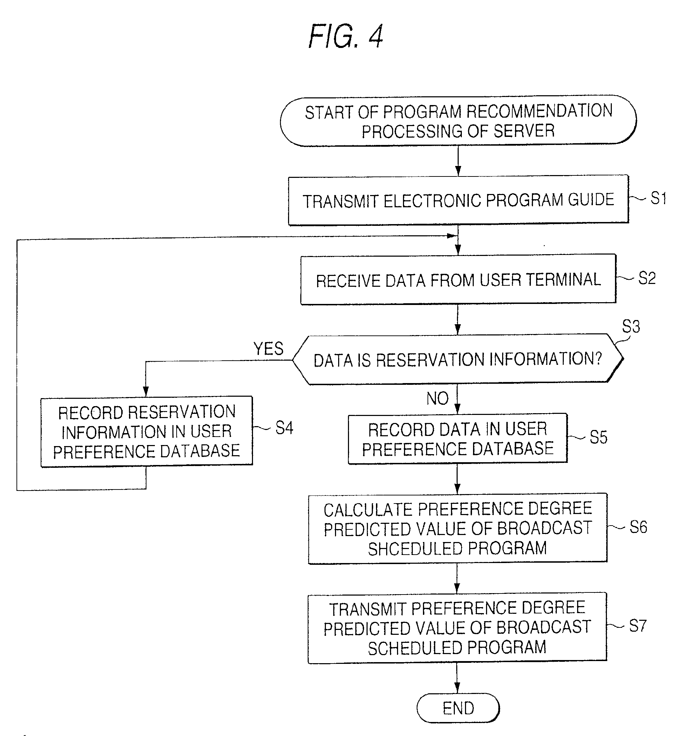

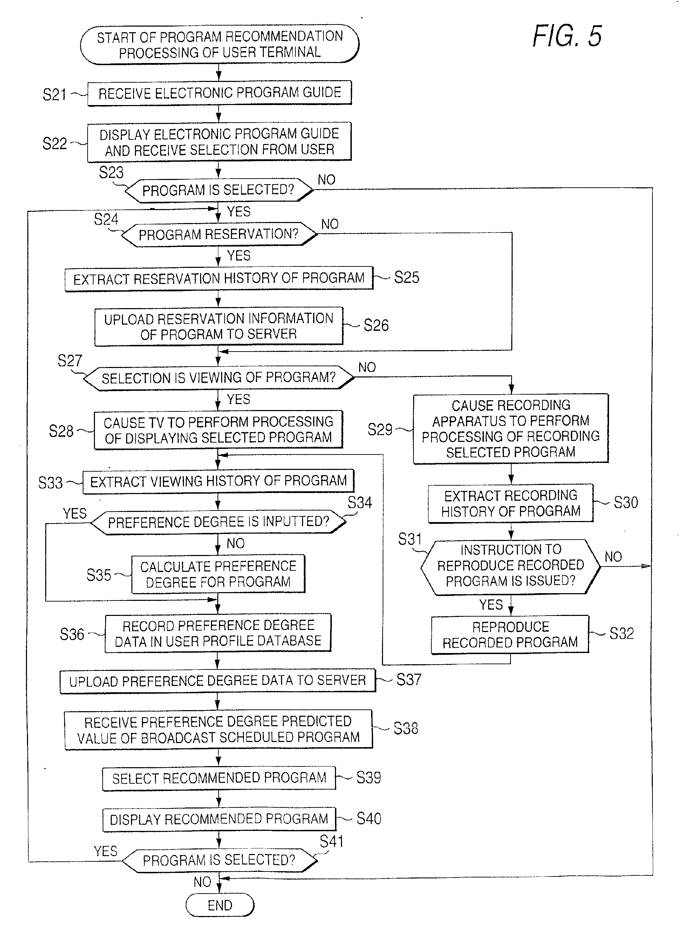

Next, a processing of recommending a broadcast scheduled program to a user will be described with reference to flowcharts of Fig. 4 and Fig. 5. Incidentally, the flowchart of Fig. 4 shows the processing of the server 1, and the flowchart of Fig. 5 shows the processing of the user terminal 3.

When a request for transmission of the electronic program guide is made from the user terminal 3, or when it becomes a previously set predetermined time, at step S1, the system controller 21 of the server 1 reads out the electronic program guide from the EPG database 22, and transmits it to the system controller 61 of the user terminal 3 through the internet 2.

At step S21, the system controller 61 of the recommendation apparatus 41 receives and stores the electronic program guide, and causes the user profile database 67 to record program identification information of plural programs contained in the electronic program guide.

At step S22, the system controller 61 causes the television receiver 42 to display a schedule table of programs contained in the electronic program guide received at the step S21, and receives input of an instruction to view or record a program from the operation input part 63.

At step S23, the system controller 61 judges whether or not selection of a program to be viewed or recorded is inputted from the operation input part 63, and in the case where the selection of the program to be viewed or recorded is not inputted, the processing is ended. In the case where the system controller 61 judges that the selection of the program to be viewed or recorded is inputted from the operation input part 63, the processing proceeds to step S24, and the system controller 61 judges whether or not the instruction inputted from the operation input part 63 is viewing of the program or reservation of recording, and in the case where it is not the reservation of the program, step S25 and step S26 are skipped.

At the step S24, in the case where the system controller 61 judges that the input from the operation input part 63 is the instruction to reserve the program, the processing proceeds to step S25, the program reservation history extraction part 69 acquires program identification information of the program receiving the instruction of viewing or recording from the electronic program guide temporarily stored in the system controller 61, and causes a numerical value "1" meaning reservation to be recorded in a column of the corresponding program identification information of the user profile data recorded in the user profile database 67. Incidentally, "0" is recorded in a column corresponding to a program which is not reserved.

At step S26, the system controller 61 reads out the program identification information recorded at the step S21 and the information of "1" or "0" indicating the existence of reservation from the user profile database 67, and transmits reservation information of the program including these to the server 1. Incidentally, the reservation information is information including program identification information, information of "1" or "0" indicating the existence of reservation of a program, and information including a user ID.

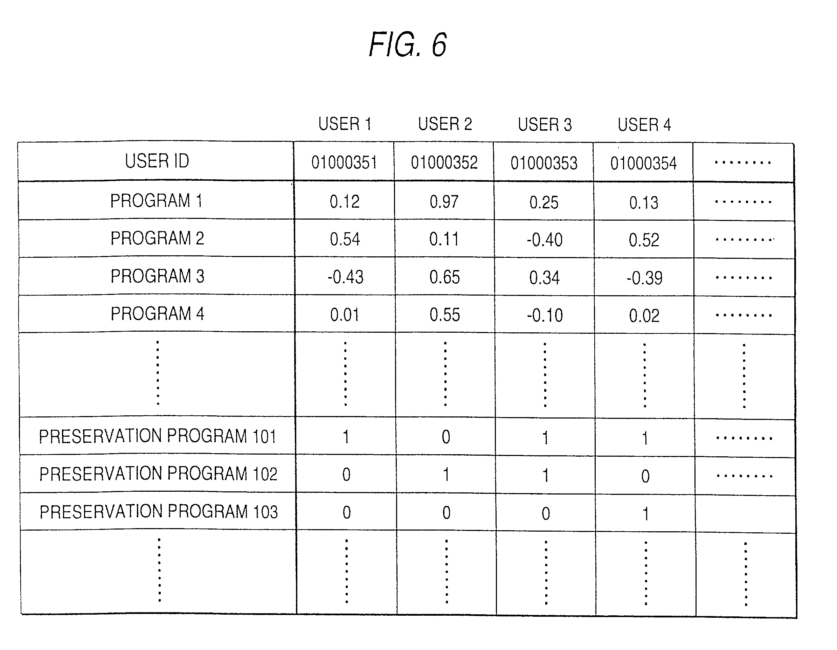

At step S2, when receiving the data from the user terminal 3, the system controller 21 of the server 1 specifies the user from the user ID included in the reservation information, and at step S3, it is judged that the data received at the step S2 is the reservation information, the processing proceeds to step S4, the identification information of the program and the information of "1" or "0" indicating the existence of reservation are extracted from the reservation information received at the step S2, and they are arranged and recorded in the user preference database 23. At that time, the user is identified based on the user ID, and they are made to correspond to the user and are recorded. Fig. 6 shows an example of information recorded in the user preference database 23 and including the identification information of the reserved programs.

In the table of Fig. 6, "user ID" is written in the top left cell, and user ID "01000351", "01000352", "01000353", and "01000354" are written toward the right. "program 1", "program 2", "program 3", and "program 4" at second to fifth rows in the leftmost column are program identification information of programs already broadcasted. The program identification information may be recorded by using numerals of a predetermined number of digits or symbols such as an alphabet.

In the table of Fig. 6, the second row reads "program 1", "0.12", "0.97", "0.25", and "0.13" from the left, and this shows preference degrees of respective users of user ID "01000351", "01000352", "01000353", and "01000354". Similarly, at the third row to the fifth row, preference degrees of the respective users for the respective programs are shown in the second column to the fifth column. As stated above, the preference degrees of the respective users for a predetermined number of programs already broadcasted are recorded in the user preference database 23.

Incidentally, in the following explanation, in Fig. 6, the user with the user ID of 01000351 is called a user 1, the user with the user ID of 01000352 is called a user 2, the user with the user ID of 01000353 is called a user 3, and the user with the user ID of 01000354 is called a user 4.

In Fig. 6, the eighth row to tenth row of the leftmost column read "reservation program 101", "reservation program 102", and "reservation program 103", and the program identification information of programs scheduled to be broadcasted hereafter is shown. In the second column to fifth column at the eighth row to tenth row, "0" or "1" is written, "0" indicates that the corresponding broadcast scheduled program is not reserved, and "1" indicates that it is reserved. For example, at the step S2, when the reservation information to reserve "reservation program 101" is received from the user 1, at the step S4, "1" is written in the cell at the eighth row and the second column. In the case of the user 1, "0" and "0" are written in the cells corresponding to "reservation program 102" and "reservation program 103", which indicates that the reservation program 102 and the reservation program 103 are not reserved.

Returning to Fig. 5, at step S27, it is judged by the system controller 61 whether or not the instruction inputted from the operation input part 63 is the viewing of a program, and in the case of the viewing of the program, the processing proceeds to step S28, the system controller 61 causes the television receiver 42 to perform a processing of displaying the selected program, and proceeds to step S33. However, at the step S24, in the case where it has been judged that the inputted instruction is the reservation (viewing reservation) of a program, the system controller is on standby till the broadcast time of the program, and issues an instruction to display the selected program to the television receiver 42 immediately before the broadcast time.

At step S27, in the case where it is judged that the instruction inputted from the operation input part 63 is not the viewing of a program (in the case where it is judged to be the recording of a program), the processing proceeds to step S29, and the system controller 61 causes the recording apparatus 43 to perform a processing of recording the selected program. However, at the step S24, in the case where it has been judged that the inputted instruction is the reservation of a program (recording reservation), the system controller causes the recording apparatus 43 to perform the recording reservation of the selected program.

At step S30, the program recording history extraction part 64 extracts the program identification information of the program corresponding to the recording instruction inputted from the operation input part 63 and the recording time from the electronic program guide temporarily stored in the system controller 61.

At step S31, when an instruction to reproduce the program recorded at the step S29 is inputted to the recording apparatus 43 from the operation input part 63, the processing proceeds to step S32, and the program recorded by the recording apparatus 43 is reproduced and is viewed through the television receiver 42, and then, the processing proceeds to step S33.

At step S31, in the case where a reproduction instruction is not inputted to the recording apparatus 43, and a recording medium in which the program is recorded is pulled out from the recording apparatus 43, or the recorded program is erased, the processing is ended.

At step S28, there is a case where a program viewed through the television receiver 42 is switched to another program halfway by input from the operation input part 63. Then, at step S33, by the instruction of the system controller 61, the program viewing history extraction part 65 calculates an accumulation viewing time of each of one or more programs viewed through the television receiver 42 at the step S28 for each program, and makes it correspond to the program identification information and stores. At this time, information concerning a broadcasting time (a time from a broadcast start time to a broadcast end time) of the program corresponding to the program identification information is extracted from the program guide stored in the system controller 61, and is made to correspond to the program identification information of each program viewed and is stored.

Besides, in the case where an adjacent processing is step S32, that is, reproduction of a recorded program, at step S33, when the instruction to reproduce the recorded program is inputted from the operation input part 63, the program viewing history extraction part 65 counts a reproduction time until an instruction to stop the reproduction is inputted from the operation input part 63 (or a time until the reproduction of the program is ended). However, in the case where fast-forward, rewinding or the like is performed during the reproduction, a time required for those is not counted, but only an accumulated reproduction time is calculated. The program viewing history extraction part 65 calculates the accumulated reproduction time of the program for each of one or more programs recorded, and causes it to correspond to the program identification information and stores it.

At step S34, the system controller 61 judges whether or not a preference degree is inputted from the operation input part 63.

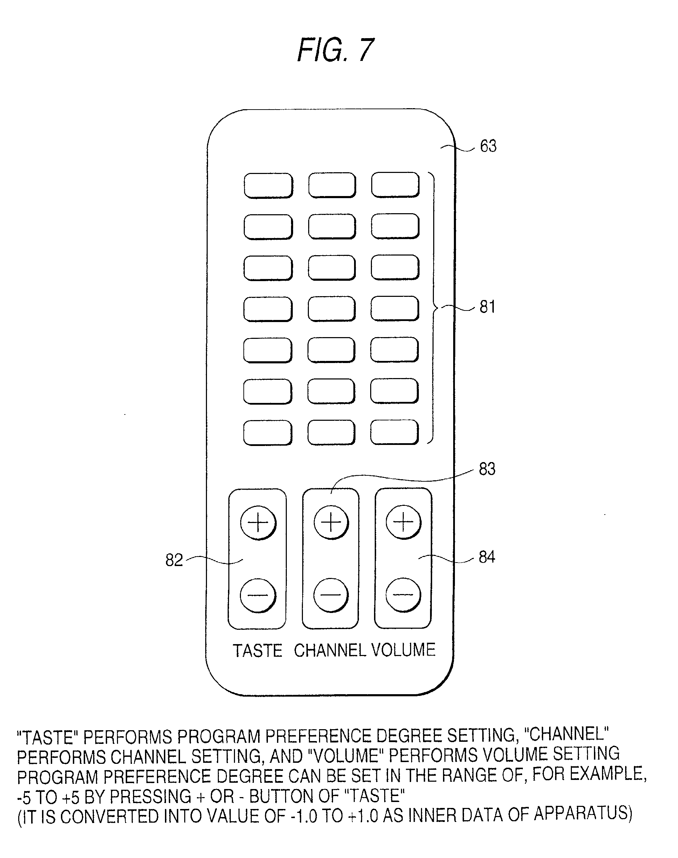

Although a preference degree to a program can be automatically calculated by the program preference degree extraction part 66, a user can manually set it by the input from the operation part 63. Fig. 7 is an example of the operation input part 63 used when the user manually inputs the preference degree.

In Fig. 7, the operation input part 63 is constructed as a remote controller, and various operation buttons 81 for giving instructions of various processings to be performed by the recommendation apparatus 41, such as a viewing instruction of a program, a recording instruction, a reproduction instruction, a reservation instruction, and an electronic program guide display instruction, are arranged. When a "+" side of a channel selection button 83 is pressed, the recommendation apparatus 41 selects a channel larger than a presently selected channel by one in previously set serial number. On the other hand, when a "-" side is pressed, a program lower than the presently selected channel by one in the serial number is selected. When a "+" side of a volume button 84 is pressed, the television receiver 42 turns up the volume of a program viewed, and on the other hand, when a "-" side is pressed, it turns down the volume of the program viewed.

A preference degree setting button 82 is used when a user manually sets a preference degree of a program viewed. The user can estimate the program with estimation set values of ten stages from -5 to +5 by operating the preference degree setting button 82, and at the step S28 or the step S32, when the "+" side or the "-" side of the preference degree setting button 82 is first pressed by the user during the viewing of a specified program, a default estimation set value "0" is displayed at an end of a screen of the television receiver 42 by which the program is viewed. In the case where the user takes an interest in the program viewed, higher estimation can be set to the program by pressing the "+" side of the preference degree setting button 82. On the other hand, in the case where the user does not take an interest in the program viewed, low estimation can be set to the program by pressing the "-" side.

When the "+" side of the preference degree setting button 82 is pressed, the estimation set value of the program is incremented by one each time it is pressed, and the display of the screen of the television receiver 42 is also correspondingly changed in the order of "1", "2", "3", "4", and "5".

On the other had, when the "-" side of the preference degree setting button 82 is pressed, the estimation set value of the program is decremented by one each time it is pressed, and the display of the screen of the television receiver 42 is also correspondingly changed in the order of "-1", "-2", "-3", "-4", and "-5". The user selectively uses the "+" side and the "-" side of the preference degree setting button 82 and can set the preference degree to a desirable value. Incidentally, of course, it is also possible to lower an excessively incremented preference degree by pressing the "-" side, or contrary, it is also possible to raise an excessively lowered preference degree by pressing the "+" side.

However, the preference degree is set in the range of -1.0 to 1.0. Then, the system controller 61 multiplies the estimation set value for the program, which is set in the manner described above, by 1/5 to calculate the preference degree in the range of -1.0 to 1.0 from the estimation set value set in the range of -5 to +5.

As described above, in the case where the estimation set value is manually inputted from the user, at step S34, the system controller 61 judges that the preference degree is inputted from the operation input part 63, the processing of step S35 is skipped, and the processing of step S36 is performed.

In the case where the preference degree is not manually inputted from the user, at the step S34, the system controller 61 judges that the preference degree is not inputted from the operation input part 63, and the processing of step S35 is performed.

At step S35, by the instruction from the system controller 61, the program preference degree extraction part 66 calculates the preference degree for each of one or more programs displayed by the television receiver 42 through a predetermined calculation described below.

In the case where a program displayed by the television receiver 42 is not one recorded in the recording apparatus 43 (in the case where it is a program viewed at the step S28), the program preference degree extraction part 66 reads out the accumulated viewing time of each program stored by the program viewing history extraction part 65 at the step S33 and the corresponding broadcasting time of the program, and calculates the preference degree for the program from the accumulated viewing time and the broadcasting time by the following expression.

$$\text{preference degree} = \text{accumulated viewing time/broadcasting time}$$

For example, in the case where a program broadcasted for one hour is viewed for 30 minutes, the calculated preference degree is 0.5.

Incidentally, in this case, the preference degree is calculated as a value in the range of 0.0 to 1.0.

In the case where the program viewed by the television receiver 42 is one recorded in the recording apparatus 43 (in the case where it is a program reproduced at the step S32), the program preference degree extraction part 66 reads out the recording time of the recorded program acquired by the program recording history extraction part 64 at the step S30 and the accumulated reproduction time of the recorded program calculated by the program viewing history extraction part 65 at the step S33. Then, from the accumulated reproduction time and the recording time of the program, the preference degree for the program is calculated through the following expression.

$$\text{preference degree} = \text{accumulated reproduction time/recording time}$$

For example, in the case where a program recorded for one hour is viewed for 30 minutes, the calculated preference degree is 0.5.

Incidentally, also in this case, the preference degree is calculated as a value in the range of 0.0 to 1.0.

By the calculation described above, the preference degree is calculated in the program preference degree extraction part 66 for each of one or more programs viewed.

At step S36, the system controller 61 reads out the preference degree data calculated at the step S35 for each program from the program preference degree extraction part 66, supplies it to the user profile database 67, and causes it to be recorded.

However, at the step S34, in the case where it is judged that the preference degree is manually set by the user, the system controller 61 supplies the preference degree set by the user to the user profile database 67 and causes it to be recorded.

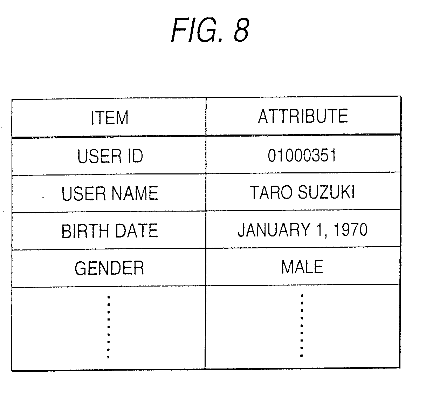

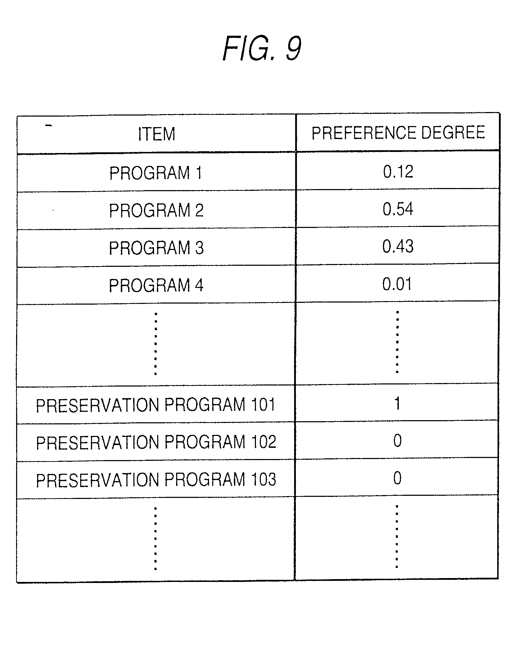

Fig. 8 and Fig. 9 show examples of data recorded in the user profile database 67. In Fig. 8, personal information of each user receiving the provision of this service is recorded.

In the table of Fig. 8, in the left column, various items of "user ID", "user name", "birth date", and "gender" are written from the second row. In the right column, corresponding attributes are written from the second row. That is, it is indicated that "user ID" is "01000351", "user name" is "Taro Suzuki", "birth date" is "January 1, 1970", and "gender" is "male".

The user profile database 67 records a table of personal information of a user as shown in Fig. 8 for each user.

Besides, the user profile database 67 records the preference degree data supplied at the step S36 as in a table shown in Fig. 9.

The table of Fig. 9 shows program preference degree data of one user recorded in the user profile database 67. In the table of Fig. 9, "program 1", "program 2", "program 3", and "program 4" at a second row to a fifth row of the left column are program identification information of already broadcasted programs. In the table of Fig. 9, preference degrees corresponding to the respective programs are written at the second row to the fifth row of the right column. That is, in Fig. 9, the preference degree for "program 1" is 0.12, the preference degree for "program 2" is 0.54, the preference degree for "program 3" is 0.43, and the preference degree for "program 4" is 0.01.

Besides, in the table of Fig. 9, program identification information "reservation program 101", "reservation program 102", and "reservation program 103" of programs scheduled to be broadcasted hereafter are recorded at an eighth row to a tenth row of the left column, and "1" indicating that the program is reserved or "0" indicating that the program is not reserved is recorded in the corresponding cell of the right column.

At step S37, the system controller 61 reads out the preference degree data made to correspond to the program identification information from the user profile database 67 at a previously set predetermined timing, and transmits them to the server 1. Incidentally, at this time, the user ID is attached to the transmitted information.

Then, the system controller 21 of the server 1 receives the preference degree data at the step S2, it is judged at step S3 that the data is not the reservation information (it is the preference degree data), the processing proceeds to step S5, and the received preference degree data is recorded in the user preference database. For example, in the case where preference degree data as shown in Fig. 9 is for the user 1 of Fig. 6, the data transmitted from the system controller 61 of the recommendation apparatus 41 is recorded in the data of the user 1 in the second column from the left of Fig.6. That is, "0.12", "0.54", "-0.43", and "0.01" from the top in the right column in Fig. 9 are respectively recorded at positions in the second column of Fig. 6 corresponding to the programs.

At step S6, the cooperation filter part 24 acquires preference degree data of plural users from the user preference database 23, and acquires the electronic program guide of programs scheduled to be broadcasted hereafter from the EPG database 22. Then, a predetermined calculation is made based on those, and a preference degree predicted value as a value predicting the degree of interest of each user is calculated for a program scheduled to be broadcasted hereafter.

The calculation principle of the preference degree predicted value will be described. First, the cooperation filter part 24 acquires the user preference data as shown in Fig. 6 from the user preference database 23. In Fig. 6, for example, it is assumed that a list of programs already broadcasted includes the program 1 to the program 4, a list of programs scheduled to be broadcasted hereafter includes the reservation program 101 to the reservation program 103, and registered users are four persons of the user 1 to the user 4.

When acquiring the user preference data, next, the cooperation filter part 24 obtains correlation coefficients of preference degrees between the respective users for the already broadcasted programs from the following mathematical expression 1.

[Mathematical expression 1]

$$\rho(x, y) = \frac{\sum_{j=1}^{n}(X_{-j}-X_{-ave})(Y_{-j}-Y_{-ave})}{\sqrt{\sum_{j=1}^{n}(X_{-j}-X_{-ave})^2}\sqrt{\sum_{j=1}^{n}(Y_{-j}-Y_{-ave})^2}} \quad \cdots \quad (1)$$

In the mathematical expression, X-j indicates a preference degree of a user X (a user among the user 1 to the user 4) for a program j (a program among the program 1 to the program 4, and the reservation program 101 to the reservation program 103). Y-j indicates a preference degree of a user Y (a user other than the user X among the user 1 to the user 4) for the program j.

X-ave and Y-ave are respectively average values of preference degrees of the user X and the user Y for the respective programs (the program 1 to the program 4, and the reservation program 101 to the reservation program 103). $\rho(x, y)$ indicates the correlation coefficient of the preference degrees for the program between the user X and the user Y. n indicates the total number of programs (n = 7 in the case of the example of Fig. 6).

According to the mathematical expression 1, for example, a correlation coefficient $\rho$ (1, 2) between the user 1 and the user 2 is obtained. Similarly, correlation coefficients $\rho$ (1, 3), $\rho$ (1, 4), $\rho$ (2, 3), $\rho$ (2, 4) and $\rho$ (3, 4) are respectively obtained between the user 1 and the user 3, the user 1 and the user 4, the user 2 and the user 3, the user 2 and the user 4, and the user 3 and the user 4.

Next, the cooperation filter part 24 uses the correlation coefficients calculated using the mathematical expression 1 to obtain preference degree predicted values for the programs to be broadcasted hereafter according to the following mathematical expression 2.

[Mathematical expression 2]

$$X_{-i} = X_{-ave} + \frac{\sum_r (Y_{-i}-Y_{-ave}) \cdot \rho(x, y)}{\sum_r \rho(x, y)} \quad \cdots \quad (2)$$

In the mathematical expression, X-i indicates a preference degree predicted value of the user X to a program i (a program among the reservation program 101 to reservation program 103). Y-i indicates a preference degree of the user Y for the program i.

$\Sigma r$ indicates the total sum of other user group (in the case where the user 1 is the user X, the user 2 to the user 4) as evaluation objects for obtaining preference degree predicted values. That is, in the data as in Fig. 6, in the case where the user 1 is the user X, for example, $\Sigma r\rho(x, y)$ means a calculation as follows:

$$\Sigma r \rho(x, y) = \rho(1, 2) + \rho(1, 3) + \rho(1, 4)$$

X-ave and Y-ave are the same as X-ave and Y-ave indicated in the mathematical expression 1.

By using the mathematical expression 2, the preference degree predicted value of the user X for the program 1 can be obtained.

As described above, first, the correlations of the preference degrees between the users are calculated by the mathematical expression 1, and next, by using the information relating to the existence of reservation of users to broadcast scheduled programs, the preference degree predicted value of the user is calculated by the mathematical expression 2, so that a preference degree predicted value of a certain user for an unreserved broadcast scheduled program can be calculated on the basis of the reservation information of the other users, and an unbroadcasted program can be recommended to the user.

Incidentally, the broadcast scheduled program includes a program broadcasted periodically, for example, every day or every week, a program broadcasted in series, and the other unbroadcasted programs.

This operation is carried out for each of plural broadcast scheduled programs acquired from the EPG database 22. Incidentally, the calculated preference degree predicted value is made to correspond to the program identification information of the broadcast scheduled program, and is temporarily stored in the cooperation filter part 24.

At step S7, the system controller 21 transmits the preference degree predicted value for the broadcast scheduled program calculated at the step S6 and the program identification information of the program to the system controller 61 of the recommendation apparatus 41.

At step S38, the system controller 61 of the recommendation apparatus 41 receives the preference degree predicted value for the broadcast scheduled program, and supplies it to the recommended program processing part 68.

At step S39, the recommended program processing part 68 selects program identification information of programs to be recommended to the user on the basis of the preference degree predicted values for the program identification information of broadcast scheduled programs received at the step S38, and prepares a list of program identification information of recommended programs. Next, the recommended program processing part 68 extracts a title of a program corresponding to the selected program identification information, a broadcast date, a broadcasting station, and a brief explanatory note of broadcast contents from the electronic program guide stored in the system controller 61, and prepares a list of recommended programs to be displayed by the television receiver 42. A selection processing of programs will be described later.

At step S40, the system controller 61 acquires the list of recommended programs prepared at the step S39 from the recommended program processing part 68, supplies it to the television receiver 42, and causes it to be displayed on the screen.

At step S41, the system controller 61 judges whether or not an instruction to select a program to be viewed or recorded from among the list of recommended programs displayed at the step S40 is inputted from the operation input part 63, and in the case where the instruction to select the program to be viewed or recorded is inputted from the operation input 63, the processing is returned to the step S24, and the above-described processing is repeated.

At step S41, in the case where it is judged that the instruction to select the program to be viewed or recorded from among the displayed list of recommended programs is not inputted, the processing is ended.

The information processing apparatus of the invention performs the processing to recommend programs to the user in the manner described above. As set forth above, in the case where a user does not manually set a preference degree, the preference degree is automatically calculated, and therefore, the user may set the preference degree only when he or she feels inclined to do so, and it becomes unnecessary to perform so each time viewing of a program is made. Besides, by calculating the preference degree predicted value using program reservation information as well, the preference degree predicted value can be calculated also for an unbroadcasted program, and the unbroadcasted program can be added to choices recommended to the user.

Incidentally, in this embodiment, although the processing (processing of the step S6) of calculating the preference degree predicted value of the broadcast scheduled program is performed after the preference degree data is received from the user terminal 3, the processing of calculating the preference degree predicted value of the broadcast scheduled program may be performed after the reservation information of the program is received. Besides, as described above, the processing of calculating the preference degree predicted value of the broadcast scheduled program may be performed in real time each time the preference degree data (reservation information) of the program is received from the user terminal 3, and further, in accordance with the operation capacity of the server 1, it may be performed every several minutes or every several hours. Besides, it may be performed when the server 1 has processing capacity in reserve.

Besides, in the above, although the electronic program guide is received from the server 1 at the step S21, it is also possible that the broadcast reception part 62 receives the electronic program guide supplied by television broadcasting electric waves from the broadcasting station 4 and supplies it to the system controller 61.

Besides, in the foregoing, although the preference degree predicted value is calculated also for a program broadcasted periodically, for example, every day or every week, or a program broadcasted in series, and a program to be recommend to the user is selected on the basis of this, with respect to the program broadcasted periodically, for example, every day or every week, or the program broadcasted in series, the program recommended to the user can be selected on the basis of already acquired preference degree data. That is, for example, in the case where with respect to programs broadcasted in series, an inputted preference degree for an already broadcasted program was high, a program in the same series scheduled to be broadcasted hereafter may be recommended to a user.

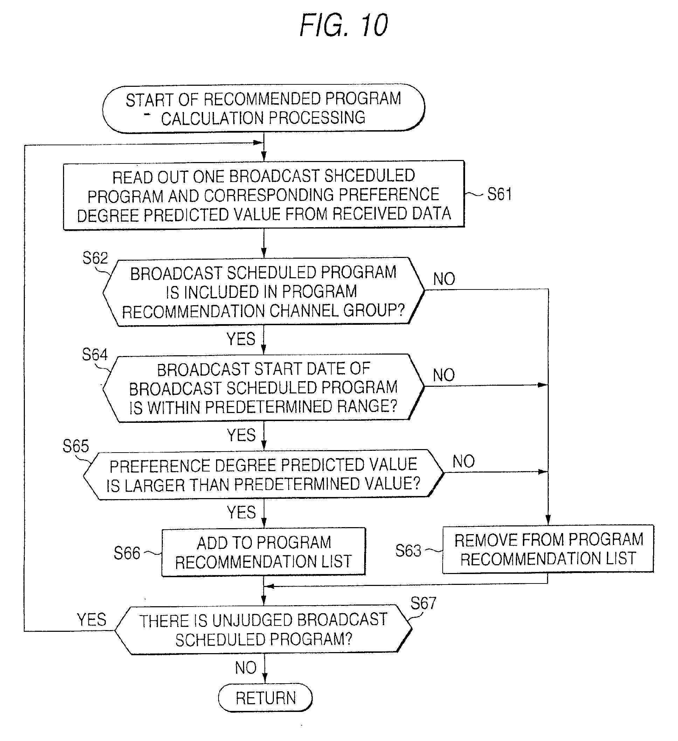

Next, the processing at the step S39 of Fig. 5, that is, the processing of preparing the list of programs recommend to the user on the basis of the preference degree predicted values of broadcast scheduled programs will be described with reference to a flowchart of Fig. 10.

At step S61, the recommended program processing part 68 reads out program identification information of one broadcast scheduled program and the corresponding preference degree predicted value from the preference degree predicted values for one or more broadcast scheduled programs, received at the step S38. Besides, the recommended program processing part 68 extracts information concerning a title of the program, a broadcasting station to broadcast the program, and a broadcast start time from the electronic program guide stored in the system controller 61 on the basis of the read out program identification information.

In the recommendation apparatus 41, when programs to be recommend to the user are selected, only programs to be broadcasted in previously set predetermined channels may be selected, and at step S62, the recommended program processing part 68 judges whether or not the channel of the broadcasting station 4 to broadcast the program read out at the step S61 is included in the previously set channel group for recommended programs, and in the case where it is not included therein, the processing proceeds to step S63, the broadcast scheduled program is removed from the program list, and it proceeds to step S67.

Incidentally, the setting of the channel group for recommended programs is made on the basis of an area where the user terminal 3 is set, and conditions of functions of the user terminal 3 (whether or not satellite broadcast can be received, or the like). Besides, it can also be set manually according to the taste of the user.

At the step S62, in the case where the recommended program processing part 68 judges that the channel of the broadcast scheduled program is included in the previously set channel group for recommended programs, the processing proceeds to step S64.

As conditions for addition to the list of recommended programs, the range of date when the broadcast scheduled program is broadcasted can be specified, and the date of the specified range is previously stored in the recommended program processing part 68. At the step S64, the recommended program processing part 68 judges whether or not the broadcast start time of the program read out at the step S61 falls in the range of the predetermined date previously stored, and in the case where it does not fall therein, the processing proceeds to the step S63, the broadcast scheduled program is removed from the program list, and it proceeds to step S67.

At the step S64, in the case where the recommended program processing part 68 judges that the broadcast start time of the broadcast scheduled program falls in the range of the predetermined date, the processing proceeds to step S65.

Incidentally, the range of the previously set date is set to a range of, for example, a start time of a program on the air to a time after 24 hours by default. However, the setting of the range of date can also be made by the user according to the taste.

As conditions for addition to the list of recommended programs, a minimum value of a preference degree predicted value is previously set in the recommended program processing part 68, and in the case where the preference degree predicted value of the broadcast scheduled program is not less than the minimum value, it is added to the list of recommended programs. At the step S65, the recommended program processing part 68 judges whether or not the preference degree predicted value of the program read out at the step S61 is not less than the previously set predetermined value, and in the case where it is not larger than the predetermined value, the processing proceeds to the step S63, the broadcast scheduled program is removed from the program list, and it proceeds to the step S67.

At the step S65, in the case where the recommended program processing part 68 judges that the preference degree predicted value of the broadcast scheduled program is not less than the previously set value, the processing proceeds to the step S66, the recommended program processing part 68 extracts a title of a program corresponding to the program identification information of the broadcast scheduled program, a broadcast date, a broadcasting station, and a brief explanatory note of broadcast contents from the electronic program guide stored in the system controller 61, and adds the information to the list of recommended programs.

After the processing of the step S63 and the step S66, at the step S67, the recommended program processing part 68 judges whether or not there is a broadcast scheduled program among the one or more broadcast scheduled programs received at the step S38, on which a judgment as to whether or not it should be added to the list of recommended programs has not been made, and in the case where it is judged that there is a program on which a judgment as to whether or not it should be added to the list of recommended programs has not been made, the processing is returned to the step S61, and the foregoing processing is repeated. However, a program on which a judgment as to whether or not it should be added to the list of recommended programs has been made is not selected at the step S61.

At the step S67, in the case where the recommended program processing part 68 judges that there is no program on which a judgment as to whether or not it should be added to the list of recommended programs has not been made (judgment has been made on all broadcast scheduled programs included in the information received at the step S38 as to whether or not they should be added to the program list), the processing is ended and proceeds to the processing of the step S40.

As set forth above, the recommended program processing part 68 selects the programs to be recommended to the user on the basis of the information received at the step S38, and prepares the list of recommended programs.

Incidentally, programs desired not to be recommended can be removed from the program recommendation list by previously setting them.

Besides, at the step S65, although it is also possible to judge whether or not a program should be added to the program recommendation list on the basis of whether the preference degree predicted value is larger than the previously set predetermined value, all broadcast scheduled programs, which are judged to be included in the program recommendation channels at the step S62, and the broadcast start dates of which are within the predetermined range, are arranged in descending order of preference degree predicted value at the step S64, and for example, top ten programs are selected from among them, and they may be added to the program recommendation list.

Besides, although the number of recommended programs to be displayed are set to be ten by default, the user can also manually set it according to the taste.

Further, the recommended program list displayed on the screen of the television receiver 42 can be arranged and displayed according to several kinds of standards, such as order of time series or descending order of preference degree predicted value, by the instruction inputted from the operation input part 63.

Incidentally, in this embodiment, although the recommendation of the television program has been described, what is recommend by the information processing system of the invention and the apparatus is not limited to the television program, but it can also be applied to, for example, various pieces of information, services, content, or commodities.

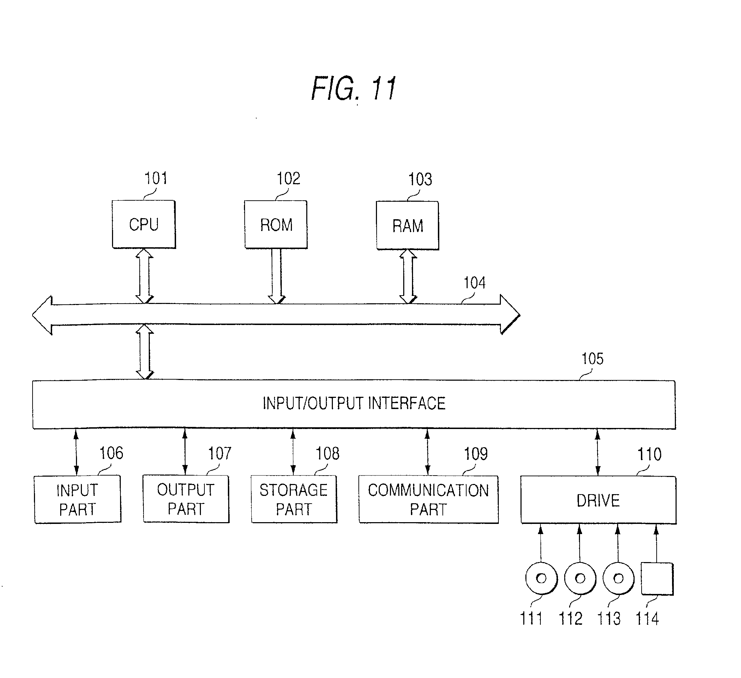

By the way, the server 1 and the recommendation apparatus 41 constituting the information processing system can be not only realized by hardware, but also executed by software. In this case, for example, a personal computer as shown in Fig. 11 can be used.

In Fig. 11, a CPU (Central Processing Unit) 101 executes various processings in accordance with programs stored in a ROM (Read Only Memory) 102 or programs loaded from a storage part 108 to a RAM (Random Access Memory) 103. Data necessary for the CPU 101 to execute various processings is also suitably stored in the RAM 103.

The CPU 101, the ROM 102, and the RAM 103 are mutually connected through a bus 104. An input/output interface 105 is also connected to this bus 104.

An input part 106 made of a keyboard, a mouse, or the like, an output part 107 made a display of a CRT (Cathode Ray Tube), an LCD (Liquid Crystal Display), etc., a speaker, or the like, a storage part 108 constituted by a hard disk or the like, and a communication part 109 constituted by a modem, a terminal adapter or the like are connected to the input/output interface 105. The communication part 109 performs a communication processing through a network.

A drive 110 is also connected to the input/output interface 105 as the need arises, a magnetic disk 111, an optical disk 112, a magneto-optical disk 113, or a semiconductor memory 114 is suitably mounted thereon, and a computer program read out from them is installed in the storage part 108 as the need arises.

For example, in the case where a series of processings of the server 1 are executed by the software, a program constituting the software is incorporated in dedicated hardware of a computer, or is installed from a network or a recording medium in a general-purpose personal computer capable of executing various functions by installing various programs.

As shown in Fig. 11, this recording medium is not only constituted by a package medium separate from an apparatus body, which is distributed to provide a program to a user and is formed of the magnetic disk 111 (including a floppy disk) in which the program is recorded, the optical disk 112 (including a CD-ROM (Compact Disk-Read Only Memory) and a DVD (Digital Versatile Disk)), the magneto-optical disk 113 ( including an MD (Mini-Disk), or the semiconductor memory 114, but also constituted by the ROM 102 in which the program is recorded or the hard disk included in the storage part 108, which is provided to the user in the state where it is previously incorporated in the apparatus body.

Incidentally, in the present specification, steps describing the program recorded in the recording medium naturally include processing performed in time series in accordance with the recited sequence, and also include processing which is not necessarily executed in time series but is executed in parallel or individually.

Besides, in the present specification, the system expresses the whole apparatus constituted by plural units.

As described above, according to the information processing system of the invention, in the information output apparatus, the designation of the item is received from the user, the preference value of the user for the received item is acquired, the identification information for identifying the item the designation of which is received and the acquired preference value corresponding to the item are transmitted to the information processing apparatus through the network, in the case where the received designation of the item is the designation of reservation of the item, the reservation information of the item and the corresponding identification information of the item are transmitted to the information processing apparatus through the network, the recommended item to be presented to the user is prepared on the basis of the predicted preference value, transmitted from the information processing apparatus, for the item the preference value of which is not acquired, and the recommended item prepared is presented to the user, and in the information processing apparatus, the predicted preference value for the item the preference value of which is not stored is calculated for each user, on the basis of the stored preference values of two or more users and the stored reservation information of two or more users, and the predicted preference value calculated is transmitted to the corresponding user, and therefore, it becomes possible to recommend the unestimated new item to the user.

Besides, according to the information output apparatus and method of the invention, the recording medium, and the program, the designation of the item is received from the user, the preference value of the user for the received item is acquired, the identification information for identifying the item the designation of which is received and the acquired preference value corresponding to the item are transmitted to the information processing apparatus through the network, in the case where the designation of the received item is designation of reservation of the item, reservation information of the item and corresponding identification information of the item are transmitted to the information processing apparatus through the network, the recommended item to be presented to the user is prepared on the basis of the predicted preference value, transmitted from the information processing apparatus, for the item the preference value of which is not acquired, and the recommended item prepared is presented to the user, and therefore, it becomes possible to recommend the unestimated new item to the user.

Besides, according to the information processing apparatus and method of the invention, the recording medium, and the program, the predicted preference value for the item the preference value of which is not stored is calculated for each user on the basis of the stored preference values of two or more users and the stored reservation information of two or more users, and the predicted preference value calculated is transmitted to the corresponding user, and therefore, it becomes possible to recommend the unestimated new item to the user.

Various respective aspects and features of the invention are defined in the appended claims. Features from the dependent claims may be combined with features of the independent claims as appropriate and not merely as explicitly set out in the claims.

**Claims**

1. An information processing system comprising an information output apparatus for outputting a recommended item and an information processing apparatus for managing the recommended item outputted to the information output apparatus, wherein
   the information output apparatus comprises:

   reception means for receiving designation of an item from a user;
   acquisition means for acquiring a preference value of the user for the item received by the reception means;
   first transmission means for transmitting identification information for identifying the item the designation of which is received by the reception means and the preference value corresponding to the item acquired by the acquisition means to the information processing apparatus through a network;
   second transmission means for transmitting, in a case where the designation of the item received by the reception means is designation of reservation of the item, reservation information of the item and corresponding identification information of the item to the information processing apparatus through the network;
   preparation means for preparing the recommended item to be presented to the user on the basis of a predicted preference value, transmitted from the information processing apparatus, for the item the preference value of which is not acquired by the acquisition means; and
   presentation means for presenting the recommended item prepared by the preparation means to the user, and
   the information processing apparatus comprises:

   first storage means for storing the identification information of the item transmitted from the information output apparatus and the corresponding preference value for each user;
   second storage means for storing the reservation information of the item transmitted from the information output apparatus and the corresponding identification information of the item for each user;
   calculation means for calculating the predicted preference value for the item the preference value of which is not stored in the first storage means for each user, on the basis of the preference values of the two or more users stored in the first storage means and the reservation information of the two or more users stored in the second storage means; and
   third transmission means for transmitting the predicted preference value calculated by the calculation means to the corresponding user.

2. An information processing system according to claim 1, wherein the item is one of information, a commodity, a service, content and a broadcast program.

3. An information output apparatus comprising:

   first reception means for receiving designation of an item from a user;
   first acquisition means for acquiring a preference value of the user for the item received by the first reception means;

first transmission means for transmitting identification information for identifying the item the designation of which is received by the first reception means and the preference value corresponding to the item acquired by the first acquisition means to an information processing apparatus through a network;
second transmission means for transmitting, in a case where the designation of the item received by the first reception means is designation of reservation of the item, reservation information of the item and the corresponding identification information of the item to the information processing apparatus through the network;
preparation means for preparing recommended items to be presented to the user on the basis of predicted preference values, transmitted from the information processing apparatus, for the items the preference values of which are not acquired by the first acquisition means; and
presentation means for presenting the recommended items prepared by the preparation means to the user.

4. The information output apparatus according to claim 3, further comprising:

receiving means for receiving a list of the items from the information processing apparatus; and
display means for displaying the list of the items received by the receiving means, wherein
the first reception means receives the designation of the item by the user from among the list of the items displayed by the display means.

5. The information output apparatus according to claim 3, wherein the item is one of information, a commodity, a service, and content.

6. The information output apparatus according to claim 3, wherein the item is a broadcast program.

7. The information output apparatus according to claim 6, further comprising:

viewing means for viewing the broadcast program;
recording means for recording the broadcast program; and
reproduction means for reproducing the broadcast program.

8. The information output apparatus according to claim 7, further comprising:

second acquisition means for acquiring information concerning a broadcasting time of the broadcast program;
first calculation means for calculating an accumulated viewing time in which the broadcast program is viewed by the viewing means;
second calculation means for calculating a recording time in which the broadcast program is recorded by the recording means;
third calculation means for calculating a reproduction time in which the broadcast program is reproduced by the reproduction means;
fourth calculation means for calculating the preference value by dividing the accumulated viewing time calculated by the first calculation means by the broadcasting time acquired by the second acquisition means; and
fifth calculation means for calculating the preference value by dividing the reproduction time calculated by the third calculation means by the recording time calculated by the second calculation means.

9. An information output apparatus according to claim 8, further comprising:

second reception means for receiving input of the preference value from the user; and
judgment means for judging whether or not the input of the preference value has been received by the second reception means, wherein
the first acquisition means acquires, in a case where the judgment means judges that the input of the preference value has been received, the preference value the input of which has been received by the second reception means, and acquires, in a case where the judgment means judges that the input of the preference value has not been received, the preference value calculated by the fourth calculation means or the fifth calculation means.

10. An information output apparatus according to claim 3, wherein the designation of the reservation includes purchase reservation of information, service or content, view reservation of a broadcast program, and recording reservation of a broadcast program.

**11.** An information output apparatus according to claim 3, wherein the first transmission means transmits information concerning the user, together with the preference value.

**12.** An information output apparatus according to claim 11, wherein the information concerning the user includes at least one of plural pieces of information concerning an age, a gender, an address, a use language, and a taste.

**13.** An information output method comprising:

a reception step of receiving designation of an item from a user;
an acquisition step of acquiring a preference value of the user for the item received by a processing of the reception step;
a first transmission step of transmitting identification information for identifying the item the designation of which is received by the processing of the reception step and the preference value corresponding to the item acquired by a processing of the acquisition step to an information processing apparatus through a network;
a second transmission step of transmitting, in a case where the designation of the item received by the processing of the reception step is designation of reservation of the item, reservation information of the item and the corresponding identification information of the item to the information processing apparatus through the network;
a preparation step of preparing a recommended item to be presented to the user on the basis of a predicted preference value, transmitted from the information processing apparatus, for the item the preference value of which is not acquired by the processing of the acquisition step; and
a presentation step of presenting the recommended item prepared by a processing of the preparation step to the user.

**14.** A recording medium in which a computer-readable program is recorded, the program comprising:

a reception step of receiving designation of an item from a user;
an acquisition step of acquiring a preference value of the user for the item received by a processing of the reception step;
a first transmission step of transmitting identification information for identifying the item the designation of which is received by the processing of the reception step and the preference value corresponding to the item acquired by a processing of the acquisition step to an information processing apparatus through a network;
a second transmission step of transmitting, in a case where the designation of the item received by the processing of the reception step is designation of reservation of the item, reservation information of the item and the corresponding identification information of the item to the information processing apparatus through the network;
a preparation step of preparing a recommended item to be presented to the user on the basis of a predicted preference value, transmitted from the information processing apparatus, for the item the preference value of which is not acquired by the processing of the acquisition step; and
a presentation step of presenting the recommended item prepared by a processing of the preparation step to the user.

**15.** A program for causing a computer to execute:

a reception step of receiving designation of an item from a user;
an acquisition step of acquiring a preference value of the user for the item received by a processing of the reception step;
a first transmission step of transmitting identification information for identifying the item the designation of which is received by the processing of the reception step and the preference value corresponding to the item acquired by a processing of the acquisition step to an information processing apparatus through a network;
a second transmission step of transmitting, in a case where the designation of the item received by the processing of the reception step is designation of reservation of the item, reservation information of the item and the corresponding identification information of the item to the information processing apparatus through the network;
a preparation step of preparing a recommended item to be presented to the user on the basis of a predicted preference value, transmitted from the information processing apparatus, for the item the preference value of which is not acquired by the processing of the acquisition step; and
a presentation step of presenting the recommended item prepared by a processing of the preparation step to the user.

**16.** An information processing apparatus comprising:

first storage means for storing identification information of an item transmitted from an information output apparatus and a corresponding preference value for each user;

second storage means for storing reservation information of an item transmitted from the information output apparatus and corresponding identification information of the item for each user;

calculation means for calculating a predicted preference value for the item the preference value of which is not stored in the first storage means for each user, on the basis of the preference values of the two or more users stored in the first storage means and the reservation information of the two or more users stored in the second storage means; and

first transmission means for transmitting the predicted preference value calculated by the calculation means to the corresponding user.

**17.** An information processing apparatus according to claim 16, wherein the calculation means obtains correlations between one user and the other plural users on the basis of the preference values of the plural users for the one or more items, weights digitized values on the basis of existence of reservation of the users other than the one user for the one item according to heights of the correlations between the one user and the other users, adds these for the plural users other than the one user, and calculates the predicted preference value of the one user for the item the preference value of which is not stored by the first storage means.

**18.** An information processing apparatus according to claim 16, further comprising:

third storage means for storing a list of the items to be displayed by the information output apparatus; and

second transmission means for transmitting the list of the items stored by the third storage means to the information output apparatus.

**19.** An information processing apparatus according to claim 16, wherein the item is a broadcast program.

**20.** An information processing apparatus according to claim 16, wherein the item is one of information, a commodity, a service, and content.

**21.** An information processing method comprising:

a first storage step of storing identification information of an item transmitted from an information output apparatus and a corresponding preference value for each user;

a second storage step of storing reservation information of an item transmitted from the information output apparatus and corresponding identification information of the item for each user;

a calculation step of calculating a predicted preference value for the item the preference value of which is not stored by a processing of the first storage step for each user, on the basis of the preference values of the two or more users stored by the processing of the first storage step and the reservation information of the two or more users stored by a processing of the second storage step; and

a transmission step of transmitting the predicted preference value calculated by a processing of the calculation step to the corresponding user.

**22.** A recording medium in which a computer-readable program is recorded, the program comprising:

a first storage control step of controlling storage of identification information of an item transmitted from an information output apparatus and a corresponding preference value for each user;

a second storage control step of controlling storage of reservation information of an item transmitted from the information output apparatus and corresponding identification information of the item for each user;

a calculation step of calculating a predicted preference value for the item the preference value of which is not stored by a processing of the first storage control step for each user, on the basis of the preference values of the two or more users stored by the processing of the first storage control step and the reservation information of the two or more users stored by a processing of the second storage control step; and

a transmission step of transmitting the predicted preference value calculated by a processing of the calculation step to the corresponding user.

**23.** A program for causing a computer to execute:

a first storage control step of controlling storage of identification information of an item transmitted from an information output apparatus and a corresponding preference value for each user;

a second storage control step of controlling storage of reservation information of an item transmitted from the information output apparatus and corresponding identification information of the item for each user;

a calculation step of calculating a predicted preference value for the item the preference value of which is not stored by a processing of the first storage control step for each user, on the basis of the preference values of the two or more users stored by the processing of the first storage control step and the reservation information of the two or more users stored by a processing of the second storage control step; and

a transmission step of transmitting the predicted preference value calculated by a processing of the calculation step to the corresponding user.

*FIG. 1*

# FIG. 2

1

| EPG DATABASE | ~ 22 |

↕

| SYSTEM CONTROLLER | ~ 21 |

↕                    ↕

23~ | USER REFERENCE DATABASE |     | COOPERATION FILTER PART | ~ 24

## FIG. 3

3

41

65 — PROGRAM VIEWING HISTORY EXTRACTION PART

66 — PROGRAM REFERENCE DEGREE EXTRACTION PART

64 — PROGRAM RECORDING HISTORY EXTRACTION PART

42 — TELEVISION RECEIVER

61 — SYSTEM CONTROLLER

43 — RECORDING APPARATUS

62 — BROADCAST RECEPTION PART

63 — OPERATION INPUT PART

67 — USER PROFILE DATABASE

68 — RECOMMENDED PROGRAM PROCESSING PART

69 — PROGRAM RESERVATION HISTORY EXTRACTION PART

## FIG. 4

```
           ┌─────────────────────────────────────┐
           │   START OF PROGRAM RECOMMENDATION    │
           │         PROCESSING OF SERVER         │
           └─────────────────────────────────────┘
                              │
                              ▼
           ┌─────────────────────────────────────┐
           │  TRANSMIT ELECTRONIC PROGRAM GUIDE   │ ～ S1
           └─────────────────────────────────────┘
                              │
                              ▼
           ┌─────────────────────────────────────┐
           │    RECEIVE DATA FROM USER TERMINAL   │ ～ S2
           └─────────────────────────────────────┘
                              │
                              ▼                          S3
        YES ⟨   DATA IS RESERVATION INFORMATION?   ⟩
                              │
                             NO │
   ┌──────────────────┐        ▼
   │ RECORD RESERVATION│     ┌──────────────────────┐
   │ INFORMATION IN USER│～S4 │  RECORD DATA IN USER │～ S5
   │ PREFERENCE DATABASE│     │  PREFERENCE DATABASE │
   └──────────────────┘       └──────────────────────┘
                                        │
                                        ▼
                             ┌──────────────────────────┐
                             │ CALCULATE PREFERENCE DEGREE│
                             │ PREDICTED VALUE OF BROADCAST│～ S6
                             │     SHCEDULED PROGRAM      │
                             └──────────────────────────┘
                                        │
                                        ▼
                             ┌──────────────────────────┐
                             │ TRANSMIT PREFERENCE DEGREE │
                             │ PREDICTED VALUE OF BROADCAST│～ S7
                             │     SCHEDULED PROGRAM      │
                             └──────────────────────────┘
                                        │
                                        ▼
                                  ⟨   END   ⟩
```

*FIG. 5*

```
      ( START OF PROGRAM RECOMMENDATION )
      (    PROCESSING OF USER TERMINAL     )
                      |
  S21 --[ RECEIVE ELECTRONIC PROGRAM GUIDE ]
                      |
      [ DISPLAY ELECTRONIC PROGRAM GUIDE ]
  S22 --[   AND RECEIVE SELECTION FROM USER ]
                      |
  S23   < PROGRAM IS SELECTED? > -- NO
                      | YES
  S24   < PROGRAM RESERVATION? > -- NO
                      | YES
      [ EXTRACT RESERVATION HISTORY OF PROGRAM ] -- S25
                      |
      [ UPLOAD RESERVATION INFORMATION ] -- S26
      [    OF PROGRAM TO SERVER        ]
                      |
  S27   < SELECTION IS VIEWING OF PROGRAM? > -- NO
                      | YES
      [ CAUSE TV TO PERFORM PROCESSING ]        [ CAUSE RECORDING ]
  S28 --[ OF DISPLAYING SELECTED PROGRAM ]  S29 --[ APPARATUS TO PERFORM ]
                      |                         [ PROCESSING OF RECORDING ]
                      |                         [    SELECTED PROGRAM     ]
  S33 --[ EXTRACT VIEWING HISTORY OF PROGRAM ]       |
                      |                         [ EXTRACT RECORDING ] -- S30
  YES < PREFERENCE DEGREE IS INPUTTED? > S34   [ HISTORY OF PROGRAM ]
                      | NO                           |
      [ CALCULATE PREFERENCE ]  S31 < INSTRUCTION TO > -- NO
  S35 --[   DEGREE FOR PROGRAM ]   < REPRODUCE RECORDED >
                      |            < PROGRAM IS ISSUED? >
                      |                      | YES
      [ RECORD PREFERENCE DEGREE ]      [ REPRODUCE ] -- S32
  S36 --[ DATA IN USER PROFILE DATABASE ]  [ RECORDED PROGRAM ]
                      |
      [ UPLOAD PREFERENCE DEGREE DATA TO SERVER ] -- S37
                      |
      [ RECEIVE PREFERENCE DEGREE PREDICTED ] -- S38
      [ VALUE OF BROADCAST SCHEDULED PROGRAM ]
                      |
      [ SELECT RECOMMENDED PROGRAM ] -- S39
                      |
      [ DISPLAY RECOMMENDED PROGRAM ] -- S40
                      |
  YES < PROGRAM IS SELECTED? > S41
                      | NO
                   ( END )
```

## FIG. 6

| | USER 1 | USER 2 | USER 3 | USER 4 | |
|---|---|---|---|---|---|
| USER ID | 01000351 | 01000352 | 01000353 | 01000354 | ········ |
| PROGRAM 1 | 0.12 | 0.97 | 0.25 | 0.13 | ········ |
| PROGRAM 2 | 0.54 | 0.11 | -0.40 | 0.52 | ········ |
| PROGRAM 3 | -0.43 | 0.65 | 0.34 | -0.39 | ········ |
| PROGRAM 4 | 0.01 | 0.55 | -0.10 | 0.02 | ········ |
| ⋮ | ⋮ | ⋮ | ⋮ | ⋮ | ⋮ |
| PRESERVATION PROGRAM 101 | 1 | 0 | 1 | 1 | ········ |
| PRESERVATION PROGRAM 102 | 0 | 1 | 1 | 0 | ········ |
| PRESERVATION PROGRAM 103 | 0 | 0 | 0 | 1 | |
| ⋮ | ⋮ | ⋮ | ⋮ | ⋮ | ⋮ |

EP 1 300 781 A2

# FIG. 7

TASTE  CHANNEL VOLUME

"TASTE" PERFORMS PROGRAM PREFERENCE DEGREE SETTING, "CHANNEL"
PERFORMS CHANNEL SETTING, AND "VOLUME" PERFORMS VOLUME SETTING
PROGRAM PREFERENCE DEGREE CAN BE SET IN THE RANGE OF, FOR EXAMPLE,
-5 TO +5 BY PRESSING + OR - BUTTON OF "TASTE"
(IT IS CONVERTED INTO VALUE OF -1.0 TO +1.0 AS INNER DATA OF APPARATUS)

# FIG. 8

| ITEM | ATTRIBUTE |
|------|-----------|
| USER ID | 01000351 |
| USER NAME | TARO SUZUKI |
| BIRTH DATE | JANUARY 1, 1970 |
| GENDER | MALE |
| ⋮ | ⋮ |

## FIG. 9

| ITEM | PREFERENCE DEGREE |
|---|---|
| PROGRAM 1 | 0.12 |
| PROGRAM 2 | 0.54 |
| PROGRAM 3 | 0.43 |
| PROGRAM 4 | 0.01 |
| ⋮ | ⋮ |
| PRESERVATION PROGRAM 101 | 1 |
| PRESERVATION PROGRAM 102 | 0 |
| PRESERVATION PROGRAM 103 | 0 |
| ⋮ | ⋮ |

## FIG. 10

```
START OF RECOMMENDED PROGRAM
   CALCULATION PROCESSING
```

READ OUT ONE BROADCAST SHCEDULED
PROGRAM AND CORRESPONDING PREFERENCE — S61
DEGREE PREDICTED VALUE FROM RECEIVED DATA

S62
BROADCAST SCHEDULED PROGRAM          NO
IS INCLUDED IN PROGRAM
RECOMMENDATION CHANNEL GROUP?

YES

S64
BROADCAST START DATE OF              NO
BROADCAST SCHEDULED PROGRAM
IS WITHIN PREDETERMINED RANGE?

YES

S65
PREFERENCE DEGREE PREDICTED VALUE    NO
IS LARGER THAN PREDETERMINED VALUE?

YES

S66 — ADD TO PROGRAM                  S63 — REMOVE FROM PROGRAM
      RECOMMENDATION LIST                    RECOMMENDATION LIST

YES          S67
THERE IS UNJUDGED BROADCAST
SCHEDULED PROGRAM?

NO

RETURN

EP 1 300 781 A2

## FIG. 11